Europäisches Patentamt

European Patent Office

Office européen des brevets

(19)

(11) Publication number : **0 205 601**
**B1**

(12) EUROPEAN PATENT SPECIFICATION

(45) Date of publication of patent specification :
01.02.89

(51) Int. Cl.⁴ : **A 23 C 21/00**

(21) Application number : 86900651.0

(22) Date of filing : 19.12.85

(86) International application number :
PCT/DK 85/00125

(87) International publication number :
WO/86039 (17.07.86 Gazettee 86/17)

(54) A METHOD AND AN APPARATUS FOR PROCESSING WHEY AND/OR PERMEATE FROM A CHEESE-WORKING PROCESS.

(30) Priority : 02.01.85 US 688349

(43) Date of publication of application :
30.12.86 Bulletin 86/52

(45) Publication of the grant of the patent :
01.02.89 Bulletin 89/05

(84) Designated contracting states :
AT BE CH DE FR GB LI NL SE

(56) References cited :
EP--A-- 0 141 403
WO--A--82 /005 70
US--A-- 1 763 633
US--A-- 2 181 146
US--A-- 2 335 380
US--A-- 2 555 514
US--A-- 3 537 860
US--A-- 3 615 663

(73) Proprietor : APV Anhydro A/S
8, Ostmarken
DK-2860 Soborg (DK)

(72) Inventor : PRESCOTT, Lewis, A.
15 Loring Drive
Lincoln, RI 02865 (US)
Inventor : GIBSON, Stewart, Graham
89A Adams Point Road
Barrington, RI 02806 (US)

(74) Representative : Hansmann, Axel et al
Patentanwälte HANSMANN & VOGESER Albert-Rosshaupter-Strasse 65
D-8000 München 70 (DE)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

## Field of the Invention

This invention relates to a method of and an apparatus for drying materials, particularly cheese-making by-products such as whey and/or permeate.

## Background of the Invention

One of the major by-products of commercial traditional cheese-making operations is the serum or watery part of the milk called whey. A more recent step in cheese-making is the socalled permeation, whereby the casein in the milk substance is concentrated by molecular filtration. The by-product of this process — the « permeate » — is very similar to whey and may be treated by the inventive method and in the inventive apparatus in a quite similar way and with a rather similar result. In the following specification and in the claims the invention is described and defined in relation to whey, but it must be understood that the term « whey » incorporates the related by-product « permeate » as well. Whey is rich in lactose, and particularly in a dry powdered form, is useful in other human and animal food products. The principal problems is to convert the largely liquid whey (approximately 94 % liquid) as it is collected from the cheese-making process into its dry powdered form.

In the prior art, there are several methods for producing powdered whey from the liquid by product. Usually, after a number of pretreatment operations, the still liquid whey is subjected to a vacuum evaporation which converts it into a substance that is between 50 % and 65 % solid. This whey, however, contains lactose in its beta amorphous form, which is unsuitable for creating a non-caking, free flowing powder. Thus, the next step is to convert the beta amorphous lactose to its alpha monohydrate state, from which the suitable powder can be obtained. This is done by crystallisation.

In the prior art, crystallisation is accomplished in batches. Large tanks are used in which the 50 % to 65 % solids wheys is cooled for up to twenty-four hours under constant agitation. Of course, in order to make the overall process even close to a continuous one, a number of the large tanks are needed so that as one tank empties another is filled, while others may have the whey in various states of crystallization. After crystallization 65 % to 80 % of the lactose in the whey is in an alpha monohydrate state, which is suitable for making a non-caking powdered whey. This crystallized whey, which is still only 50 % to 65 % solids, is then fed to a large spray dryer and sometimes to a secondary dryer, which remove the bulk of the remaining liquid, after which the whey is a dry powder of about 96 % solids.

Unfortunately, the prior art process has several drawbacks. First, the amount of energy used in the process is significant because the energy-efficient vacuum evaporation process is only used to reduce the whey to a level of 50 % to 65 % solids. Any further removal of liquid from the whey by evaporation at that point results in a whey of such high viscosity that it would inhibit agitation in the crystallizing tanks. As a result, the vacuum evaporation process cannot be used to maximum efficiency, and instead, substantial drying of the whey must be done by the less energy-efficient air dryer after crystallization. Also, the overall process itself is not really completely continuous since the crystallizing tanks operate on a batch basis, and requires a great deal of large and expensive equipment, particularly in the form of the crystallizing tanks and a large air dryer needed to remove a substantial amount of liquid after crystallization.

## Summary of the Invention

We have discovered a method of drying whey which is more energy-efficient and requires less equipment than previous methods. The liquid whey is initially concentrated by the evaporation process until it is about 75 % solids by energy-efficient vacuum evaporators, after which the whey paste is passed through a continuous heat exchanger for cooling and crystallization, and from which it goes into a small spin flash dryer for final drying to produce the desired powder.

In the preferred embodiment, a finishing vacuum evaporater is used after the usual vacuum evaporators to produce a whey in paste form which is approximately 75 % solids and is at a temperature usually between 45 °C and 80 °C. The resulting whey paste is then fed to a cooled heat exchanger for continuous crystallization. The whey paste, with its now high content of alpha-monohydrate lactose, goes from the heat exchanger into a spin flash dryer which quickly converts the paste into a dry, non-caking powder.

The method reduces the energy used for several reasons. First, the bulk of the evaporation in this invention is done by the vacuum evaporators and the finishing evaporators, which are more energy-efficient than the dryers which do most of the drying on the prior art. Also, since the whey is at a higher solids concentration when it reaches the crystallizing stage with this invention, the crystallization is faster and more complete due to the super-saturation of the lactose in the more concentrated whey.

As a result, the continuous crystallization occurs to a much higher degree than the prior art, which results in a more non-caking powder, and it requires fewer, less expensive and smaller pieces of equipment. The process is also a continuous one, which enchances operation of the overall system.

## Description of the Preferred Embodiment

We turn now to a description of the preferred embodiment, after first briefly describing the drawings.

Figure 1 is a block diagram of an overall system incorporating the whey processing invention ;

Figure 2 is a diagram of the overall system with the invention, and

Figure 3 is a cross sectional view of the spin flash dryer used with the invention.

## Structure and Operation

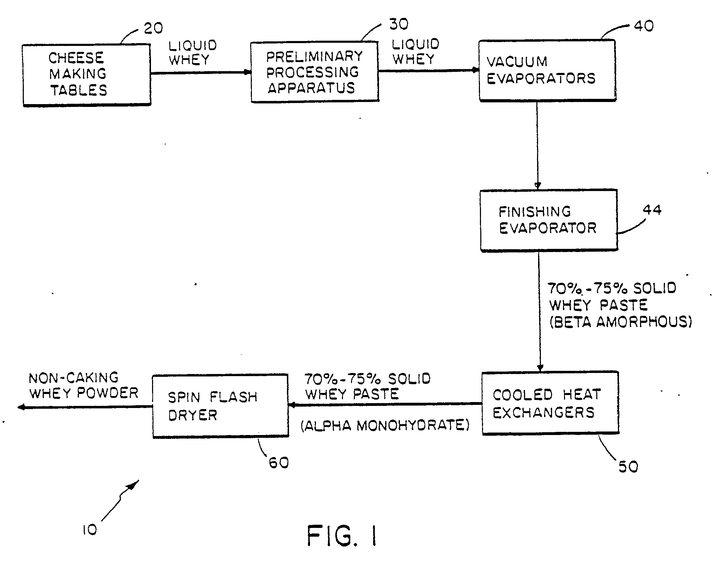

Referring to Figure 1, the whey processing apparatus of this invention is shown at 10. The apparatus 10 generally comprises cheese-making tables 20, preprocessing apparatus 30, vacuum evaporators 40, a finishing evaporator 44, a crystallizing heat exchanger 50 and a spin flash dryer 60.

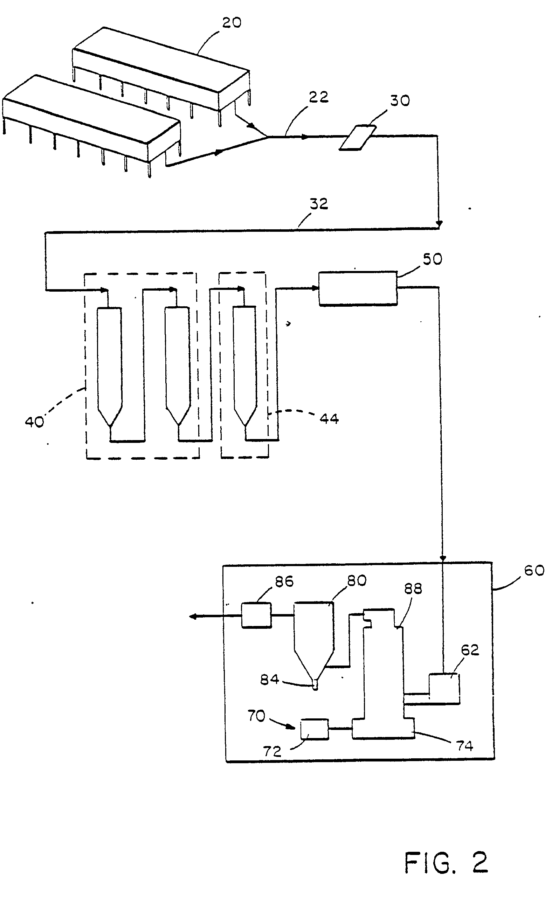

As shown in figure 2, the cheese-making tables 20 are conventional vats in which processed milk is converted to cheese by the usual method. Only two tables are shown, but in practice, any number of tables could be used. There are two basic by-products from the cheese-making, and they are curds and whey, both of which are subsequently processed for further use. The curd processing apparatus is not shown here.

The whey from the cheese-making tables 20 is about 94 % liquid, and it is drawn from the tables through tubes 22, which carry it to some conventional preprocessing apparatus 30. One example of such preprocessing apparatus is shown on pages 74 and 75 of the September, 1981 issue of « Food Engineering ».

From the preprocessing apparatus 30, additional pipes 32 carry the still-liquid whey to the vacuum evaporators 40. The vacuum evaporators 40 are a series of vertical containers which remove the liquid content from the whey. The evaporators 40 may be any of those commonly used in whey processing.

In the preferred embodiment, the evaporators 40 are followed by a finishing evaporator 44 which removes more of the liquid content of the whey. The resulting whey from the finishing evaporator 44 is up to 75 % solids and, in the preferred embodiment, has a temperature of about 45 °C to 80 °C. The lactose in the whey paste, however, is still largely in its beta amorphous state, and it is fed to a continuous crystallizing device called a cooled heat exchanger 50. (The 75 % solid whey paste would be so thick that it would overload and clog the agitators in conventional crystallizing tanks).The resulting product from the exchanger 50 is a whey paste in which the lactose is largely of the alpha-monohydrate form. The paste has a temperature of about 15 °C to 45 °C, and it is then fed to the spin flash dryer 60.

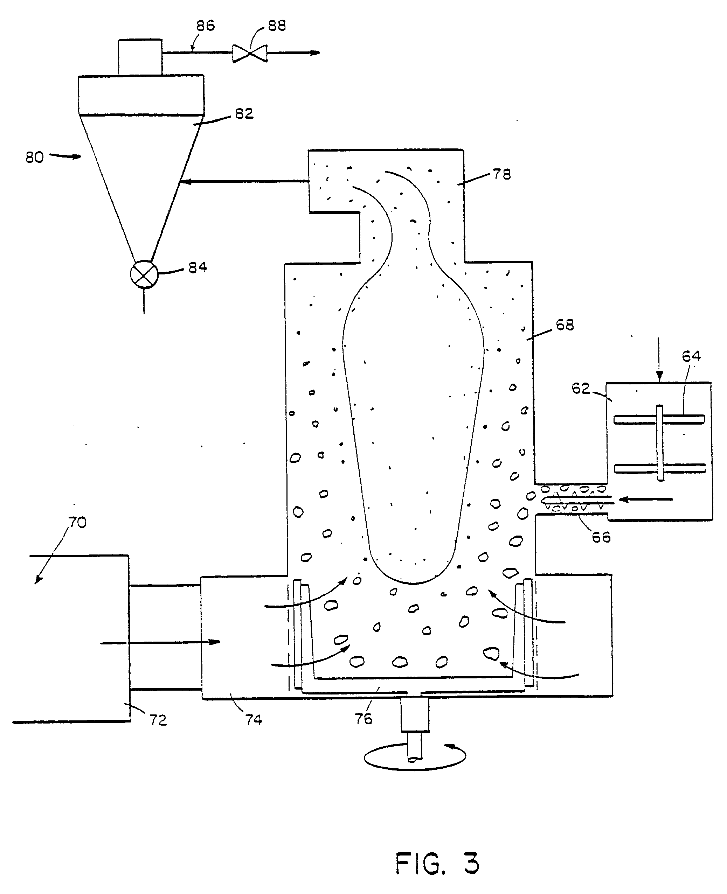

As best shown in Figure 3, the whey paste from the heat exchanger 50 is sent to a feeding tank 62 for the dryer 60. The tank 62 contains a rotating agitator 64 and a screw feeder 66. The screw feeder 66, which has a variable speed drive, is connected to a drying chamber 68. Air is also taken into the dryer 60 at an inlet 70. Inlet 70 is connected through a heater 72 to an air distributor 74 surrounding and communicating with the lower portion of the drying chamber 68. A rotor 76 is also disposed in the bottom of the drying chamber 68.

At the top of the chamber 68 is a classifier 78 which is connected to a filter apparatus 80. The filter apparatus 80 in the preferred embodiment is a cyclone filter 82 above a valve 84. An air exhaust duct 86 is connected from the filter to a scrubber 88 and other cleansing equipment (not shown) to remove whey particles from any exhausted air. Such a dryer, as well as the finishing evaporator and continuous heat exchanger, is available from APV Anhydro A/S, Oestmarken 8, DK-2860 Soeborg, Denmark. A suitable spin flash dryer for use in the present invention is also disclosed in EP-application No. 84113132.9 published as EP-A-141403.

In operation, the whey paste is fed into the feeding tank 62 of the dryer 60. The rotating agitator 64 gently mixes the whey and forces it into the screw feeder 66, which carries the whey paste into the drying chamber 68 at a continuous rate. At the same time, air from the inlet 70, which is first heated by heater 72, is introduced tangentially into the bottom of the chamber 68 by the distributor 74. The heated air rises to the top of the chamber 68. The dryer thus operates as an agitated fluidized bed. The rotor 76 turns in the bottom of the chamber 68 agitating the powder and the large lumps of whey entering from the screw feeder 66. The lumps dry around their outside and the dried portions tend to break off. When fine enough, this powder is carried upward with the airflow. The rest of the lumps remain near the bottom of the chamber 68 until they are sufficiently dried and small enough to by carried to the top of the chamber as well. Once at the top of the chamber 68, the dried powder and air travel through classifier 78 to the filter apparatus 80. In the filter apparatus 80, the air is drawn into the cyclone 82 in a circular fashion. This forces the solid particles to the outside walls where they then drop to valve 84, which is used to collect the now-powdered whey. The powder at that point is a non-caking whey powder that is approximately 96 % solids. The air exits from the cyclone 82 and goes to the scrubber 88 and other equipment (not shown) for further cleaning before it is released.

There are several advantages to the system of this invention. First, the finishing evaporator 44 does the large part of the work in converting the liquid whey to solid form, as opposed to the less efficient air dryer in prior art systems. This will give an estimated energy savings of about 20 %. Also, smaller equipment is required, as the dryer here does not need to do the substantial drying that the prior dryers did (because the whey is already 75 % solids when it reaches the dryer of this invention). Also, the spin flash dryer of this invention performs its drying quicker than other air dryers. Less equipment is also required here than in prior art processes. Particularly, the series of large batch crystallizing tanks are replaced here by a much smaller, continuously operating cooled heat exchanger. The net result of all this is that much less plant space is needed to accomodate the equipment.

Finally, the process of this invention is a continuous one, which greatly simplifies plant operation. In the prior art processes, after the evaporators are turned off, it is necessary for the air dryer to run for a full day to process the large amount of whey stored in the crystallizers. Otherwise, if left in the vats, the whey might solidify or decay. Conversely, when the old systems are started, the evaporators must work for a full day (to fill the tanks) before the dryer is activated.

## Claims

1. A method for converting whey and/or permeate, hereinafter called whey only, as a by-product from a cheese-making process into a dry non-caking powder, wherein

said whey is collected from the cheese-making process and e. g. undergone a pretreatment,

said collected whey is concentrated by vacuum evaporation,

said concentrated whey is crystallized to transform most of its lactose content into its alpha-monohydrate form, and

said crystallized whey is air dried to form a powder,

characterized in that :

said vacuum evaporation is carried out to a solids content of approximately 75 % or greater,

said crystallization is carried out by cooling the concentrated whey in a continuously operating heat exchanger, and

said crystallized whey as a paste is dried in a fluidized bed in a spin flash dryer to a non-caking powder.

2. A method as claimed in claim 1, wherein said concentrated whey leaves the vacuum evaporation step with a temperature between 45 and 80 °C.

3. A method as claimed in claim 1 or claim 2, wherein said crystallized whey leaves the heat exchanger with a temperature between 15 and 45 °C.

4. A method as claimed in any of claims 1-3, wherein said non-caking powder leaves the spin flash dryer with a solids content of about 96 %.

5. An apparatus for carrying out the method claimed in any of claims 1-4 and comprising :

means for collecting and e. g. pretreating whey from a cheese-making process,

vacuum evaporators for concentrating said collected whey,

means for crystallizing said concentrated whey so as to transform most of its lactose content into its alpha-monohydrate form, and

means for air drying said crystallized whey to a powder, wherein :

said vacuum evaporators comprise at least one finishing evaporator adapted to concentrate said whey to a solids content of approximately 75 % or greater,

said means for crystallizing the concentrated whey comprises at least one continuously operating heat exchanger, and

said means for air drying the crystallized whey comprises a fluidized bed in at least one spin flash dryer.

6. An apparatus as claimed in claim 5, wherein said finishing evaporator is adapted to yield concentrated whey at a temperature between 45 and 80 °C.

7. An apparatus as claimed in claim 5 or claim 6, wherein said heat exchanger is adapted to yield crystallized whey at a temperature between 15 and 45 °C.

8. An apparatus as claimed in any of claims 5-7, wherein said spin flash dryer is adapted to yield a non caking powder with a solids content of about 96 %.

## Patentansprüche

1. Verfahren zum Umwandeln von Molke und/ oder Permeat, im folgenden nur noch als Molke bezeichnet, als Nebenprodukt bei der Käseherstellung in ein trockenes, nicht klumpendes Mehl, wobei

diese Molke beim Käseherstellungsprozeß gesammelt und beispielsweise einer Vorbehandlung unterzogen wird,

diese gesammelte Molke durch Vakuumverdampfung konzentriert wird,

diese konzentrierte Molke kristallisiert wird, um ein Großteil ihres Laktosegehalts in ihre Alpha-Monohydrat-Form zu überführen, und

die kristallisierte Molke zur Bildung eines Mehles luftgetrocknet wird,
dadurch gekennzeichnet, daß

die Vakuumverdampfung bis zu einem Feststoffgehalt von etwa 75 % oder mehr durchgeführt wird,

die Kristallisation unter Kühlung der konzentrierten Molke in einem kontinuierlich arbeitenden Wärmetauscher durchgeführt wird, und

die kristallisierte Molke als Paste im Verflüssigungsbett eines Spin-Flash-Trockners zu einem nichtklumpenden Mehl getrocknet wird.

2. Verfahren nach Anspruch 1, dadurch gekennzeichnet, daß die konzentrierte Molke den Schritt der Vakuumverdampfung mit einer Temperatur zwischen 45 °C und 80 °C verläßt.

3. Verfahren nach Anspruch 1 oder 2, dadurch gekennzeichnet, daß die kristallisierte Molke den Wärmetauscher bei einer Temperatur zwischen 15 °C und 45 °C verläßt.

4. Verfahren nach einem der Ansprüche 1 bis 3, dadurch gekennzeichnet, daß das nichtklumpende Mehl den Spin-Flash-Trockner mit einem Feststoffgehalt von etwa 96 % verläßt.

5. Vorrichtung zur Durchführung des Verfahrens nach einem der Ansprüche 1 bis 4, mit

Mitteln zum Sammeln und beispielsweise Vorbehandeln von Molke aus einem Käseherstellungsprozeß,

einem Vakuumverdampfer zum Konzentrieren der gesammelten Molke,

Mittel zum Kristallisieren der konzentrierten Molke, um das meiste ihres Laktosegehaltes in die Alpha-Monohydrat-Form überzuführen, und

Mittel zur Lufttrocknung der kristallisierten Molke zu einem Mehl,
dadurch gekennzeichnet, daß

der Vakuumverdampfer wenigstens einen Endverdampfer aufweist, um die Molke bis zu einem Feststoffgehalt von annähernd 75 % oder mehr zu konzentrieren,

die Mittel zum Kristallisieren der konzentrierten Molke wenigstens einen kontinuierlich arbeitenden Wärmetauscher aufweisen, und

die Mittel zur Lufttrocknung der kristallisierten Molke ein Verflüssigungsbett in wenigstens einem Spin-Flash-Trockner aufweist.

6. Vorrichtung nach Anspruch 5, dadurch gekennzeichnet, daß der Endverdampfer so ausgelegt ist, daß konzentrierte Molke mit einer Temperatur zwischen 45 °C und 80 °C erzielt wird.

7. Vorrichtung nach Anspruch 5 oder 6, dadurch gekennzeichnet, daß der Wärmetauscher zum Erzielen kristallisierter Molke mit einer Temperatur zwischen 15 °C und 45 °C ausgelegt ist.

8. Vorrichtung nach einem der Ansprüche 5 bis 7, dadurch gekennzeichnet, daß der Spin-Flash-Trockner zum Erzielen eines nichtklumpenden Mehles mit einem Feststoffgehalt von etwa 96 % ausgelegt ist.

**Revendications**

1. Procédé pour transformer du petit-lait et/ou du filtrat, appelés ci-dessous uniquement petit-lait, obtenus comme sous-produits d'un processus de fabrication de fromage, en une poudre sèche qui ne s'agglutine pas, dans lequel :

on recueille le petit-lait venant du processus de fabrication de fromage et on le soumet par exemple à un prétraitement ;

on concentre par évaporation sous vide le petit-lait recueilli ;

on fait cristalliser le petit-lait concentré pour transformer la majeure partie du lactose qu'il contient en la forme monohydrate alpha de celui-ci ; et

on sèche à l'air le petit-lait cristallisé pour former une poudre,
caractérisé en ce que

on procède à l'évaporation sous vide jusqu'à obtenir une teneur en solides d'environ 75 % ou plus ;

on procède à la cristallisation en refroidissant le petit-lait concentré dans un échangeur de chaleur à fonctionnement continu ; et

on sèche le petit-lait cristallisé à l'état de pâte dans un lit fluidisé dans un sécheur centrifuge ultra-rapide pour obtenir une poudre qui ne s'agglutine pas.

2. Procédé conforme à la revendication 1, dans lequel le petit-lait concentré quitte l'étape d'évaporation sous vide à une température comprise entre 45 et 80 °C.

3. Procédé conforme à l'une des revendications 1 ou 2, dans lequel le petit-lait cristallisé quitte l'échangeur de chaleur à une température comprise entre 15 et 45 °C.

4. Procédé conforme à l'une des revendications 1 à 3, dans lequel la poudre qui ne s'agglutine pas quitte le sécheur centrifuge ultra-rapide avec une teneur en solides d'environ 96 %.

5. Appareil pour mettre en œuvre le procédé selon l'une des revendications 1 à 4, comprenant :

des moyens pour recueillir et par exemple prétraiter du petit-lait venant d'un processus de fabrication de fromage ;

des évaporateurs sous vide pour concentrer le petit-lait recueilli ;

des moyens pour faire cristalliser le petit-lait concentré de façon à transformer la majeure partie du lactose qu'il contient en la forme monohydrate alpha de celui-ci ; et

des moyens pour sécher à l'air le petit-lait cristallisé pour obtenir une poudre ;
dans lequel

les évaporateurs sous vide comprennent au moins un évaporateur de finition destiné à concentrer le petit-lait jusqu'à obtenir une teneur en solides d'environ 75 % ou plus ;

les moyens pour faire cristalliser le petit-lait concentré comprennent au moins un échangeur de chaleur fonctionnant en continu ; et

les moyens pour sécher à l'air le petit-lait cristallisé comprennent un lit fluidisé dans au moins un sécheur centrifuge ultra-rapide.

6. Appareil conforme à la revendication 5, dans lequel l'évaporateur de finition est adapté à produire du petit-lait concentré à une température comprise entre 45 et 80 °C.

7. Appareil conforme à l'une des revendications 5 ou 6, dans lequel l'échangeur de chaleur est adapté à produire du petit-lait cristallisé à une température comprise entre 15 et 45 °C.

8. Appareil conforme à l'une des revendications 5 à 7, dans lequel le sécheur centrifuge ultra-rapide est adapté à produire une poudre qui ne s'agglutine pas avec une teneur en solides d'environ 96 %.

FIG. I

FIG. 2

FIG. 3